# EUROPEAN PATENT SPECIFICATION

(11) **EP 4 092 604 B1**
(45) Date of publication and mention of the grant of the patent: **06.03.2024**
(21) Application number: 20913207.5
(22) Date of filing: 18.01.2020
(51) Int. Cl.: G06Q 50/06, C10L 1/02

(54) **CO2-REDUCTION CREDIT COMPUTING SYSTEM USING OILY WASTEWATER**
GUTSCHRIFTRECHNERSYSTEM FÜR CO2-REDUKTION UNTER VERWENDUNG VON ÖLIGEM ABWASSER
SYSTÈME DE CALCUL DE CRÉDIT DE RÉDUCTION DE CO2 À L'AIDE D'EAUX USÉES HUILEUSES

(43) Date of publication of application: 23.11.2022
(73) Proprietor: TBM Co., Ltd., Tokorozawa-shi Saitama, 359-1164 (JP)
(72) Inventor: SAHARA, Kunihiro, Kodaira-shi, Tokyo 187-0025 (JP)
(74) Representative: Cabinet Chaillot
(86) International application number: PCT/JP2020/001623
(87) International publication number: WO 2021/144994

(56) References cited:
- JP-A- 2002 181 304
- JP-A- 2011 180 791
- US-A1- 2012 023 001
- US-A1- 2012 271 677
- US-A1- 2014 318 631
- US-A1- 2018 232 811

## Description

### Field of the Invention

This invention relates to a carbon offset credit calculation system, which can bring about carbon offset utilizing waste oil and calculates carbon offset credits based on this.

### Background Art

Recently the problem of Global warming has become more and more serious. The emission of greenhouse gas such as carbon dioxide gas and methane gas has been reduced. For example, the Paris Agreement defines an international rule relating to Global warming after 2020. The Goal of the Paris Agreement is to make all the countries including developed and developing countries enter the Agreement and to achieve zero greenhouse gas emissions by late 21st century.

One of the important policies by the Japanese government relating to the Global warming problem is a J-credit Scheme (refer to non-Patent Reference 1). In this J-credit Scheme, when companies implement carbon offset voluntarily, those companies can sell credits to other companies that apply the credit system, wherein the credits are approved by the government as carbon offset credits. As a result of this, sales of carbon offset products and services will be promoted.

There are many ways to acquire carbon offset credits. Introducing facilities for renewable energy relating to solar power energy and wind power plants, introducing eco-friendly products such as heat pumps, and forest economy activities are examples. Recycling biomass (recycling waste) is also thought to be one of them.

For example, waste oil, which can be biomass resources, wasted from food service establishments, food factories and so on, weighs more than 300,000 tons in a year in Japan. If it is expanded to a global scale, the amount will be huge. Recently, a biomass generation system using a diesel generator has been developed in order to produce original biomass fuels from waste oil, which used only to be wasted as industrial sludge (refer to Patent References 1 to 3). With this biomass generation system, carbon offset, recycling, and water purification can be achieved. Documents US 2018/232811 A1, US 2012/023001 A1 and US 2012/271677 A1 illustrate the technological background of the present invention as defined into claims 1, 5 and 8.

### Citation List

### Patent Literature

[Patent document 1]JP2014-217804A
[Patent document 2]Japanese Patent No.5452814
[Patent document 3]Publication of Utility Model Registration No. 3216173
US 2018/232811 A1
US 2012/023001 A1
US 2012/271677 A1

### Non-patent Literature

[Non-patent document 1]"J-Credit Scheme" [Searched on December 20 2019], <URL:https://japancredit.go.jp /.

### BRIEF SUMMARY OF THE INVENTION

### Problems that Invention is to Solve

As the global warming problem is getting serious, the need for interoperability and portability of CO2 credit information, such as sharing and comparing data relating to greenhouse gas reduction credit among different systems, is growing rapidly. In addition, it is expected that new services and industries will be created, once the interoperability and portability of CO2 credit information are established.

Furthermore, IoT (Internet of Things), which can connect everything via the Internet and urges social revolution, has recently been spreading. Therefore, it is desirable to construct a carbon offset credit calculation system utilizing IoT as soon as possible in order to stop Global warming. However, it is not easy to produce a carbon offset credit calculation system especially in the field of waste oil. The reasons will be mentioned below.

Firstly, producing a carbon offset credit calculation system utilizing waste oil requires various specialized technologies relating to waste oil such as: (1) advanced technology to separate and collect waste oil from food service establishments, factories, and so on efficiently, (2) technology to purify and modify low-quality waste oil, which is solid at standard temperature and contains a lot of water and contamination, into generation fuels, and (3) technology for stable biomass generation by a diesel generator with solid fuels at standard temperature.

Secondly, observation data required for/to construct a carbon offset credit calculation system are dispersed in various places such as shops, industrial factories, fuel factories, power plants, and so on, wherein waste oil is collected from these places. In addition, in terms of data for a carbon offset credit calculation, servers, access methods, metadata, format, measurement units, each designation, and the like are not integrated. As a result, the interoperability and portability of CO2 credit information have not been ensured yet.

The present invention has been made in view of the above-mentioned problems and has an objective to provide a carbon offset credit calculation system utilizing waste oil, which can calculate and obtain carbon offset credits easier by achieving the interoperability of the data relating to waste oil, wherein said data used to be dispersed.

### Means to Solve the Problems

It is an object of the present invention to eliminate or at least alleviate the described problems. This object is achieved by a system, method and a program in accordance with the appended claims 1,5 and 8. Preferred embodiments are defined in the dependent claims.

In order to solve the abovementioned issues, the present invention is a carbon offset credit calculation system utilizing waste oil comprising: a first terminal device, which inputs information relating to waste oil regarded as a biomass resource; a second terminal device, which is owned by a fuel manufactory and inputs information relating to biofuel, which is purified from waste oil, wherein the fuel manufactory produces the biofuel based on the waste oil; a third terminal device, which is owned by a site consuming biofuel, inputs information relating to power generation and fuel consumption; a carbon offset credit calculation server, which calculates a carbon offset amount based on information input by the first terminal device, the second terminal device, and the third terminal device, and calculates a carbon offset credit based on the carbon offset amount; wherein the first terminal device, the second terminal device, the third terminal device, and the carbon offset calculation server, are connected to one another via the network.

In this carbon offset credit calculation system utilizing waste oil, wherein the terminal devices comprise an input unit and a transaction unit, which transacts data between the terminal device and the carbon offset credit calculation server, wherein the information being input by the input unit of the first terminal device is a collected waste oil amount from the first terminal device located at a collection site, wherein the information being input by the input unit of the second terminal device is a biofuel production amount, wherein the information being input by the input unit of the third terminal device is an actual biofuel power generation amount and an actual biofuel consumption amount by a boiler or an incinerator.

In this carbon offset credit calculation system utilizing waste oil, wherein the carbon offset credit calculation server comprising: a communication unit, which communicates data with the terminal devices; a calculation unit, which calculates the carbon offset amount based on the obtained values via the communication unit and also calculates a carbon offset credit based on said carbon offset amount; and a memory.

In this carbon offset credit calculation system utilizing waste oil, wherein the calculation unit calculates the carbon offset amount by multiplying the actual biofuel power generation amount, which is obtained via the communication unit, with a CO2 emission coefficient.

In an embodiment not forming part of the claimed invention, the calculation unit calculates the carbon offset amount by multiplying the actual biofuel consumption amount, which is obtained via the communication unit, with a biofuel standard thermal amount and a CO2 emission coefficient of an original fuel.

In this carbon offset credit calculation system utilizing waste oil, preferably, wherein the calculation unit calculates a biofuel estimated production amount by multiplying the collected waste oil amount at each collection site, which is obtained via the communication unit, with a fuel yield at each collection site, and then the calculation unit calculates a biofuel production contribution rate based on a ratio of said biofuel estimated production amount and then obtains the carbon offset amount at each collection site by multiplying the biofuel production contribution rate with the carbon offset amount.

In this carbon offset credit calculation system utilizing waste oil, preferably, wherein the carbon offset amount at each collection site is memorized in the memory according to the identification of each terminal device located at said each collection site.

In this carbon offset credit calculation system utilizing waste oil, preferably, wherein the memory memorizes at least one of: an identification, which is given to said each terminal device; information related to the location of the terminal device; a carbon offset credit based on the carbon offset amount related to the identification; a nation/region information related to the identification; productivity related to the identification; and a work quality information related to the identification.

In order to solve the abovementioned issues, the present invention is a carbon offset credit calculation method utilizing waste oil comprising: a collected biomass amount reporting step, which reports a collected waste oil amount from a first terminal device located at each collection site to a carbon offset credit calculation server, wherein the collection site collects waste oil and the carbon offset credit calculation server calculates a carbon offset credit; a fuel production reporting step, which reports a biofuel production amount from a second terminal device located at a fuel manufactory to the carbon offset credit calculation server; an actual power generation amount reporting step, which reports an actual power generation amount using the biofuel from a third terminal device located at a power plant to the carbon offset credit calculation server; and a calculation step, wherein the carbon offset credit calculation server calculates a carbon offset amount based on said reported information and calculates a carbon offset credit based on said carbon offset amount in the calculation step, wherein the carbon offset amount is calculated by multiplying the actual biofuel power generation amount with a CO2 emission coefficient in the calculation step.

In this carbon offset credit calculation method utilizing waste oil, preferably, further comprising: an actual fuel consumption amount reporting step, which reports an actual fuel consumption amount based on biofuel from a third terminal device located at a boiler site or an incinerator site to the carbon offset credit calculation server.

In this carbon offset credit calculation method utilizing waste oil, preferably, further comprising: a step, which feedbacks the result of work quality to the first terminal device; and a step, which feedbacks the result of productivity to the second terminal device.

In order to solve the abovementioned issues, the present invention is a program causing a computer to execute a certain process, comprising: a collected biomass amount report step, which reports a collected waste oil amount from a first terminal device located at each collection site to a carbon offset credit calculation server, wherein the collection site collects waste oil and the carbon offset credit calculation server calculates a carbon offset credit; a fuel production report step, which reports a biofuel production amount from a second terminal device located at a fuel manufactory to the carbon offset credit calculation server; an actual power generation amount report step, which reports an actual power generation amount using the biofuel from a third terminal device located at a power plant to the carbon offset credit calculation server; and a calculation step, wherein the carbon offset credit calculation server calculates a carbon offset amount based on said reported information and calculates a carbon offset credit based on said carbon offset amount in the calculation step, wherein the carbon offset amount is calculated by multiplying the actual biofuel power generation amount with a CO2 emission coefficient in the calculation step.

### Effects of the Invention

The present invention is a carbon offset credit calculation system utilizing waste oil comprising: a first terminal device, which inputs information relating to waste oil regarded as a biomass resource; a second terminal device, which is owned by a fuel manufactory and inputs information relating to biofuel, which is purified from waste oil, wherein the fuel manufactory produces the biofuel based on the waste oil; a third terminal device, which is owned by a site consuming biofuel, inputs information relating to power generation and fuel consumption; a carbon offset credit calculation server, which calculates a carbon offset amount based on information input by the first terminal device, the second terminal device, and the third terminal device, and calculates a carbon offset credit based on the carbon offset amount; wherein the first terminal device, the second terminal device, the third terminal device, and the carbon offset credit calculation server, are connected to one another via the network. With this configuration, the carbon offset credit calculation system utilizing waste oil can calculate and obtain carbon offset credits easier by achieving the interoperability of the data relating to waste oil, wherein said data used to be dispersed.

### Brief description of Drawings

Fig. 1 is a whole process diagram of a carbon offset credit calculation system according to an embodiment of this invention.
Fig. 2 is an example of an oil-sludge separator according to the carbon offset credit calculation system.
Fig. 3 is a whole structure diagram of the carbon offset credit calculation system.
Fig. 4 is a flowchart showing the whole process of the carbon offset credit calculation system.
Fig. 5 is a functional block diagram of the carbon offset credit calculation system.
Fig. 6 is an example of table information memorized in a carbon offset credit calculation server, which is included in the carbon offset credit calculation system.
Fig. 7 is an example of a calculation result shown in a display of the carbon offset credit calculation system.
Fig. 8 is an example of a calculation result shown in a display of the carbon offset credit calculation system.
Fig. 9 is a sequential diagram showing processes of the carbon offset credit calculation system.

### Best Mode for Carrying Out the Invention

### (Embodiment)

According to an embodiment, a carbon offset credit calculation system utilizing waste oil will be explained by referring to figures. The carbon offset credit calculation system mainly calculates and sells carbon offset credits utilizing collected waste oil.

### <Whole process figure>

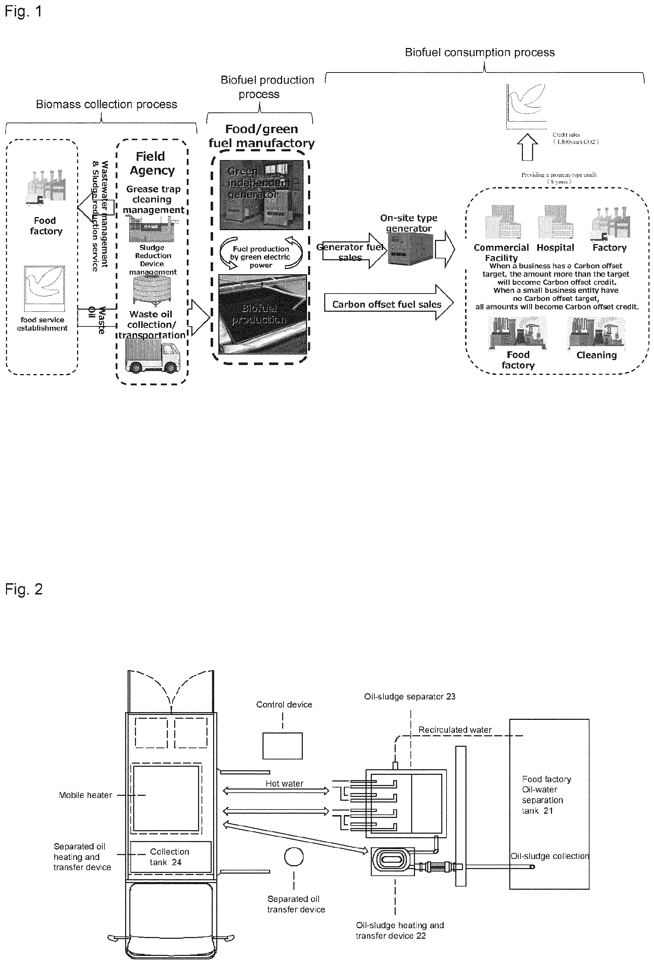

The whole process of the carbon offset credit calculation system according to the embodiment will be explained, referring to Fig. 1. As shown in Fig. 1, the carbon offset credit calculation system 1 comprises a biomass collection process, a biofuel production process, and a biofuel consumption process.

First, in the biomass collection process, waste oil is collected from food service establishments, food factories, etc. Herein, biomass means "renewable organic resources derived from an organism, except for fossil resources". The wasted biomass among biomass includes wasted papers, livestock excrements, wasted food, sewage sludges, and so on. CO2 emitted from the combustion of biomass is equal to CO2 absorbed from the atmosphere during the process of photosynthesis. Therefore, by replacing energy and products derived from fossil fuels with biomass, it can largely contribute to the reduction of CO2, which is one of the greenhouse gases and causes global warming.

In general, various water pollution substances are included in wastewater from food service establishments such as fast food shops, restaurants, hotels, food factories and the like. If wastewater is wasted without any purifications, oil in wastewater will be attached and set to a waste pipe. The solid oil not only clogs the pipe but also makes it harder to purify water at a treatment tank and a sewage treatment plant. In addition, it affects the environment.

Therefore, facilities for dumping wastewater, including solid substances such as floating substances, comprise processing units (grease trap, oil-water separation tank, raw water tank) in order to pool wastewater for the time being or to deposit solid substances, or to float and separate oil, or to remove these temporarily for physical removal.

For example, in this biomass collection process, a field agency manages a grease trap cleaning at a food service establishment and collects waste oil, which is a biomass resource, from the grease trap. Herein, a grease trap is a storage tank that traps and prevents the inflow of oil in oil-contaminated wastewater that could contaminate drainage channels (i.e., drainpipes) and river and sea water if discharged as is. Herein, the device disclosed in patent No.4401007, the device disclosed in patent No.4420750, and the device disclosed in utility patent No.3216173 are applicable as a technology to collect biomass from a grease trap. The applicant owns these patents.

Another field agency manages an oil-water separation tank at a food factory and collects biomass from this oil-water separation tank. Concretely, the field agency separates oil, water, and sludge from the oil-water separation tank at the food factory by using an oil-sludge separator and collects oil (that is, biomass) among them. The field agency also manages the oil-sludge separator.

For example, the technology in Fig.2 owned by the applicant can be applicable for the oil-sludge separator. Concretely, oil sludges are collected from oil-water separation tank 21 at a food factory via an oil-sludge heating and transfer device 22 and said oil sludges are transferred in the oil-sludge separator 23. In the heated oil-sludge separator 23, water and sludge with a bigger specific gravity settle down. On the other hand, oil with a smaller specific gravity goes up. Therefore, oils in the upper layer can be collected as biomass. Said oils are collected into a collection tank 24 equipped with a track and the like. Herein, PCM (Phase Change Material) equipped with a track is used for a mobile heater for heating the oil-sludge heating and transfer device 22 and the oil-sludge separator 23. Then, biomass collected at a food factory will be delivered into the biofuel production process.

In the biofuel production process, biofuel will be produced from the delivered biomass. In general, biomass contains a lot of water and objects. It is also solidified at a normal temperature and is low quality. The biofuel production process can purify and turn biomass into fuels for power generation and produce biofuels (SMO (Straight Mixed Oil) for power generation, carbon offset fuel), which can be sold.

An independent generator (diesel generator) can be used for producing biofuel, wherein the generator uses said biofuel as a green power to produce biofuel. Herein, patent No.5269552, 5452814, and so on can be used for producing biofuel from biomass, wherein these patents are owned by the applicant.

In the following biofuel consumption process, an SMO and a carbon offset fuel for power generation are produced in the biofuel production process, which is used as a fuel. An SMO can be used as a fuel resource for an on-site type diesel power generator and the like. Specifically, businesses (food factories, etc.), which have already introduced an SMO specialized tank and an SMO specialized power generator, and so on, are entitled to this system. Herein, SMO means oils produced from waste oil having a lot of beef tallow, lard, etc., without executing chemical synthesis. On the other hand, a carbon offset fuel can be applied to a boiler, an incinerator, and so on at factories. It can also be used as an alternative fuel instead of a mineral oil such as a heavy oil A.

Herein, businesses, which have introduced a biofuel (SMO for power generation and a carbon offset fuel) produced from waste oil, are entitled to receive carbon offset credits. In a case when a business has a carbon offset target, the amount more than the target will become carbon offset credits. In a case when a small business entity does not have any carbon offset target, all amounts will become saved as carbon offset credits. carbon offset credit can be sold (for example, 1,800yen/ton CO2) via a J-credit Scheme operated by the government.

### <Whole system figure>

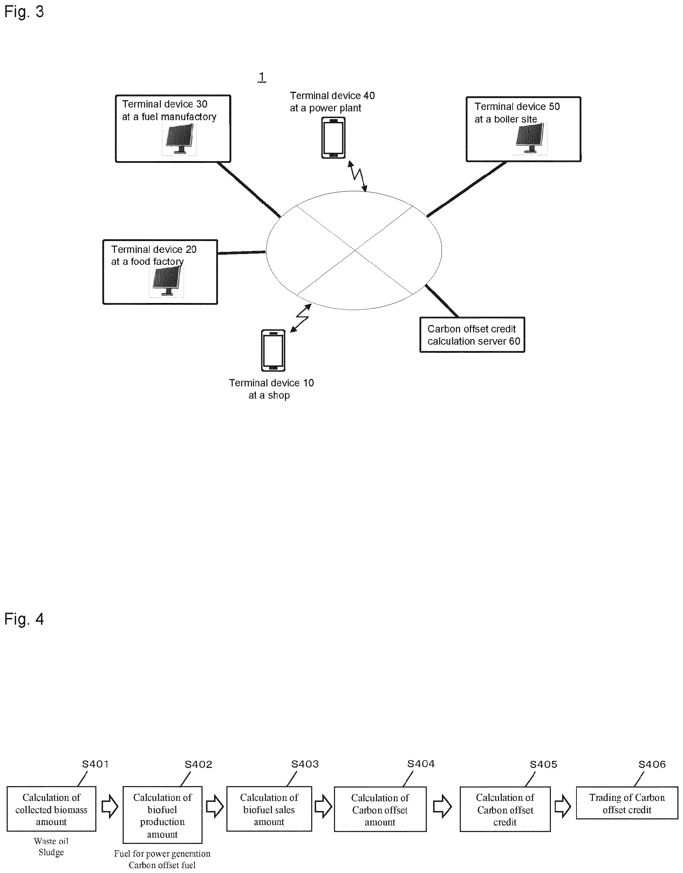

Next, the whole system relating to the carbon offset credit calculation system 1 according to this embodiment will be explained by referring to Fig. 3. The carbon offset credit calculation system 1 comprises a terminal device (first terminal device) 10 owned by a field agency A that manages wastewater at a shop; a terminal device (first terminal device) 20 owned by a field agency B that manages wastewater at a food factory; a terminal device (second terminal device) 30 owned by a fuel manufactory; a terminal device (third terminal device) 40 owned by an on-site power plant; a terminal device (third terminal device) 50 owned by a boiler site; and a CO2 credit calculation server 60, wherein these are connected to one another via a wide area network such as the Internet.

The terminal device 10 is a personal computer, a smartphone, and the like, which is located at a shop managed by the field agency A. A specialized application is installed in the terminal device 10, and the result will be displayed on the screen. This specialized application is such as a web application visualizing the carbon offset credit calculation and providing GUI (Graphical User Interface) as a specialized application or a web browser. The terminal device 10 establishes a session with the carbon offset credit calculation server 60 based on a specific protocol and carries out sending/receiving data, files, and so on relating to waste oil at a grease trap.

The terminal device 20 is a device, which is located at a food factory managed by the field agency B and executes a specialized application and displays the result on the screen. The terminal device 20 sends/receives data and files, and the like, relating to waste oil at an oil-water separation tank, between the carbon offset credit calculation server 60.

The terminal device 30 is a device, which is located at a fuel manufactory and executes a specialized application and displays the result on the screen. The terminal device 30 sends/receives data and files, and the like, relating to the fuel production amount, between the carbon offset credit calculation server 60.

The terminal device 40 is a device, which is located at an on-site power plant and executes a specialized application and displays the result on the screen. The terminal device 40 sends/receives data and files, and the like, relating to the fuel supply amount and the actual power generation amount between the carbon offset credit calculation server 60 based on a specific protocol.

The terminal device 50 is a device, which is located at a boiler site, and so on, and executes a specialized application and displays the result on the screen. The terminal device 50 sends/receives data and files, and the like, relating to the fuel supply amount and the actual fuel consumption amount between the carbon offset credit calculation server 60.

The carbon offset credit calculation server 60 is a server connected with the terminal device 10,20,30,40,50 via the network to calculate carbon offset credits. The carbon offset credit calculation server 60 receives data from the terminal device 10,20,30,40,50 and obtains the actual measured values from the terminal device 10,20,30,40,50 using the HTTP request format and so on, and calculates carbon offset credits. In other words, the carbon offset credit calculation server 60 obtains the actual measured values from the terminal device 10-50 and calculates the result of the carbon offset calculation.

Herein, among the carbon offset credit calculation server 60 and the terminal device 10-50, data for a carbon offset credit calculation such as access methods, metadata, format, measurement units, each designation, and the like are integrated. As a result of this, every client can understand the characteristics of data, and the interoperability of the data has been established.

### <Operation process of the credit calculation system 1>

Next, the credit calculation system 1, according to this embodiment, will be explained, referring to Fig. 4. First, the calculation and entry of a collected biomass (waste oil or oil sludge) amount will be conducted by the terminal devices 10, 20, which are located at a shop, food factory, and so on managed by a field agency (S401). Next, the calculation and entry of a biofuel (SMO or carbon offset fuel) production amount will be conducted by the terminal device 30, which is located at a fuel manufactory (S402). In addition, the calculation of a biofuel sales amount will be conducted by the terminal devices 40,50, which are located at an on-site power plant or a boiler site (S403).

And the carbon offset credit calculation server 60, which obtained information related to an actual power generation amount and an actual fuel consumption amount from the terminal devices 40,50 via the network, calculates a carbon offset amount for each agency (each collection site) based on a certain equation (S404) then obtains a carbon offset credit based on the carbon offset amount(S405). The carbon offset amount will become an indicator when distributing or calculating carbon offset credits.

Finally, the trading of the carbon offset credit will be conducted (S406). Herein, in terms of the carbon offset credit, the trading can be utilized by the J-credit trading scheme operated by the government. In terms of J-credit trading scheme, how to trade has already been decided. First, the credit for sale will be uploaded onto the website as a mutual transaction, or an intermediate agency will be utilized. If any trading transaction is not completed within six months from the upload, bidding will be conducted as a bidding selling. Herein, it is possible to trade by using different ways.

### <Functional block diagram>

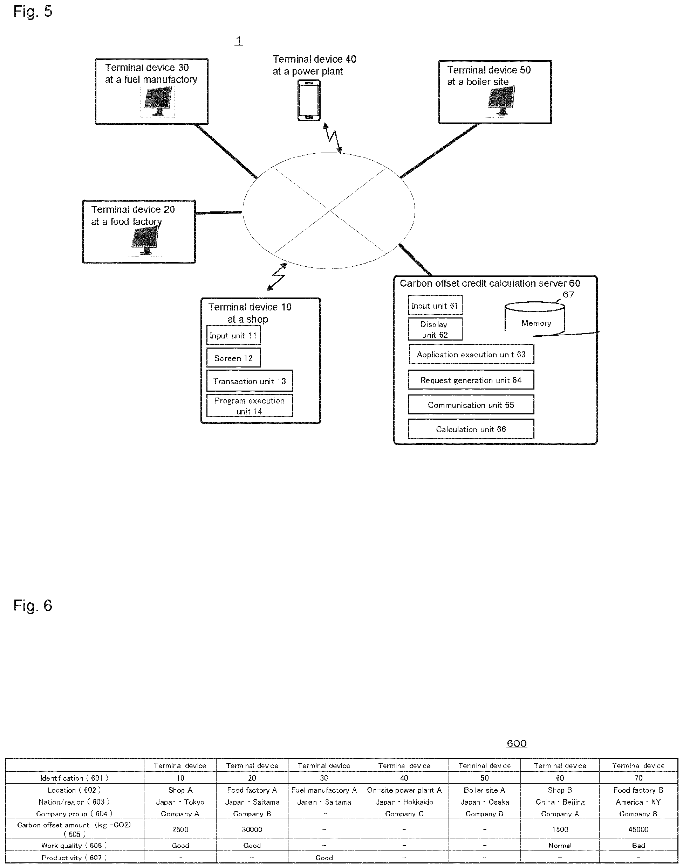

Next, the functional block diagram of each processing unit of the credit calculation system 1 according to this embodiment will be explained, referring to Fig. 5.

The terminal device 10 comprises: an input unit 11 such as a keyboard; a screen 12 such as a crystal display; a transaction unit 13, which transacts data between the terminal device 10 and the carbon offset credit calculation server 60; and a program execution unit 14, which executes an application program. Herein, the application program can be a carbon offset credit calculation program. Another terminal devices 20,30,40,50 also comprise the same units.

The carbon offset credit calculation server 60 is a terminal such as a personal computer and comprises: an input unit 61 such as a keyboard; a display unit 62 such as a crystal display; an application execution unit 63, which executes a specialized application to calculate carbon offset credits using a Web browser; a request generation unit 64, which generates a request order when instructed a data request from a user via the input unit 61; a communication unit 65, which communicates data with the terminal device 10-50; a calculation unit 66, which calculates the carbon offset amount based on the result of the obtained values; and a memory 67 such as a memory.

Specifically, the application execution unit 63 executes a Web browser to display the executed result of the application program. The request generation unit 64 requests (HTTP request) to the terminal device 10-50 using the HTTP Protocol, according to a request from the user via the input unit 61. The data format for an HTTP request, which is sent from the communication unit 65, is XML and the like.

The calculation unit 66 calculates the carbon offset amount and the carbon offset credit based on a specific equation and displays the result using a visualizing GUI on the display unit 62 and so on. The memory 67 memorizes the carbon offset credit, user information such as productivity and work quality as table information according to the identification (ID) given to each terminal device 10-50.

Herein, the information memorized in the memory 67 will be explained, referring to table 600 in Fig. 6. As shown in Fig. 6, the carbon offset credit calculation server 60 memorizes at least one of: an identification 601, which is given to each terminal device; information 602 relating to the location of the terminal device; a company group information 604 relating to the location; carbon offset credit 605 based on the carbon offset amount related to the identification 601; a nation/region information 603 relating to the identification 601; a productivity 607 related to the unique identification 601; and a work quality information 606 related to the unique identification 601.

### <Calculation example of carbon offset credit>

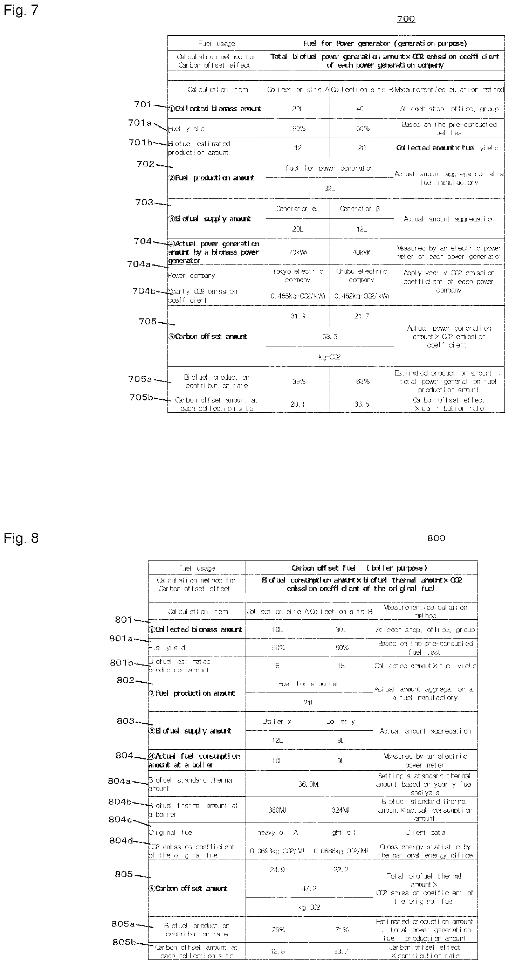

Next, a specific calculation result by the carbon offset credit calculation server 60 will be explained, referring to an example 700 shown in Fig. 7. Herein, Fig. 7 is displayed on the screen 62 of a terminal device located at the carbon offset credit calculation server 60. Fig. 7 shows a case wherein a fuel usage is for power generator (generation purpose). In addition, provided that the effect of carbon offset is calculated based on "total biofuel power generation amount × CO2 emission coefficient of each power generation company". Herein, the CO2 emission coefficient is an indicator of how much carbon dioxide is emitted when a power generation company generates a certain amount of electricity and is calculated based on the "actual carbon dioxide emission amount ÷ electricity sales amount".

Firstly, the carbon offset credit calculation server 60 collects the collected waste oil amount from each shop, office, group, etc., and calculates the total amount. In Fig.7, the collected biomass amount 701 (20 liters in this figure) from the terminal device at collection site A and the collected biomass amount 701 from the terminal device 20 at collection site B (40 liters in this figure) are reported to the server 60. Herein, the carbon offset credit calculation server 60 can send a request to each site and obtains the amount therefrom.

Then, the actual fuel production amount 702 is aggregated by a fuel manufactory, and the terminal device at the fuel manufactory reports the biofuel supply amount 703 of each power generator and the actual biofuel power generation amount 704 by a biomass power generator to the carbon offset credit calculation server 60. This is measured by an electric power meter of a power generator. In this figure, 70KWh at a generator α and 48KWh at a generator β are reported.

The carbon offset credit calculation server 60 has already obtained a yearly CO2 emission coefficient 704b of each power company 704a. In this figure, the CO2 emission coefficient is 0.455kg-CO2/KWh for Tokyo electric company 0.452kg-CO2/Kwh for Chubu electric company.

The calculation unit 66 of the carbon offset credit calculation server 60 multiples the actual power generation amount 704 with the CO2 emission coefficient 704a and obtains the carbon offset amount 705 of each power generator.

Herein, the carbon offset credit calculation server 60 has already obtained a pre-determined fuel yield 701a at each collection site based on the pre-conducted fuel test (in this figure, 60% at the collection site A, 50% at the collection site B). The biofuel estimated production amount 701b is calculated by multiplying the collected biomass amount 701 at each collection site with the fuel yield 701a (in this figure, 12 liters at the collection site A, 20 liters at the collection site B). Then, the calculation unit 66 calculates the biofuel estimated production amount 701b by multiplying the collected biomass fuel amount 701 at each collection site, which was received via the communication unit 65, with the fuel yield 701a at each collection site. And then, the calculation unit 66 calculates a biofuel production contribution rate 705a based on the ratio of said biofuel estimated production amount 701b, and then obtains a carbon offset amount 705b at each collection site by multiplying the biofuel production contribution rate 705a with the carbon offset amount 705. The carbon offset amount 705b at each collection site is memorized in the memory 67 according to the identification of each terminal device located at each collection site. Herein, this amount will become an indicator when distributing carbon offset credit to company groups.

Next, a specific calculation result by the carbon offset credit calculation server 60 will be explained by referring to a display example in Fig. 8. In Fig. 8, the fuel usage is a carbon offset fuel (boiler purpose), and the calculation method for a carbon offset effect is provided as "biofuel consumption amount × biofuel thermal amount × CO2 emission coefficient of the original fuel".

The collected biomass amount 801 (in this figure 10 liters) from the terminal device at the collection site C and the collected biomass amount 801 (in this figure 30 liters) from the terminal device 20 at the collection site D are reported to the server 60.

Then, the actual fuel production amount 802 is measured at the fuel production factory, and then the terminal device at the boiler site reports the biofuel supply amount 803 and the actual fuel consumption amount 804 at the boiler to the carbon offset credit calculation server 60. This is measured by a fuel meter. In this figure, 10 liters at a boiler X and 9 liters at a boiler Y are reported.

Then, the carbon offset credit calculation server 60 obtains a biofuel standard thermal amount 804a by setting a standard thermal amount based on a fuel analysis every year beforehand. The thermal amount 804b at a boiler will be calculated by multiplying this standard thermal amount 804a with the actual biofuel consumption amount 804. In addition, the carbon offset credit calculation server 60 obtains the original fuel 804c from a client data and a CO2 emission coefficient of the original fuel based on a gross energy statistic by the national energy office. In this figure, the CO2 emission coefficient 804d is 0.0693kg-CO2/MJ for heavy oil A and 0.0686kg-CO2/MJ for light oil.

The calculation unit 66 of the carbon offset credit calculation server 60 multiples the actual thermal amount 804b at a boiler with the CO2 emission coefficient 804d and obtains the carbon offset amounts 805 of each boiler.

Herein, the carbon offset credit calculation server 60 obtains a pre-determined fuel yield 801a at each collection site based on the pre-conducted fuel test (in this figure, 60% at the collection site C, 50% at the collection site D) beforehand. The biofuel estimated production amount 801b is calculated by multiplying the collected biomass amount 801 at each collection site with the fuel yield 801a (in this figure, 6 liters at the collection site C, 15 liters at the collection site D). Then, the calculation unit 66 calculates the biofuel estimated production amount 801b by multiplying the collected biomass fuel amount 801 at each collection site, which was received via the communication unit 65, with the fuel yield 801a at each collection site.
And then, the calculation unit 66 calculates a biofuel production contribution rate 805a based on the ratio of said biofuel estimated production amount 801b and then obtains a carbon offset amount 805b at each collection site by multiplying this biofuel production contribution rate 805a with the carbon offset amount 805. The carbon offset amount 805b at each collection site is memorized in the memory 67 according to the identification of each terminal device located at each collection site. Herein, this amount will become an indicator when distributing carbon offset credit to company groups.

### <Sequence figure of this system>

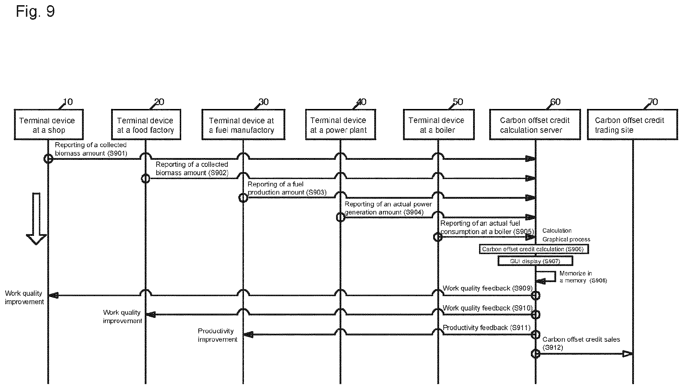

Next, the whole sequence of this carbon offset credit calculation system 1 according to this embodiment will be explained, referring to Fig. 9. Herein, Fig. 9 is merely an example; therefore, other sequences having a different sequence can be applicable to this system.

First, a collected biomass amount (collected waste oil amount), which is equal to s collected waste oil amount from a collection site, will be reported from the terminal device 10 at a shop to the carbon offset credit calculation server 60 (S901). Also, a collected biomass amount will be reported from the terminal device 20 at a food factory to the carbon offset credit calculation server 60 (S902). And a fuel production amount will be reported from the terminal device 30 at a fuel manufactory to the carbon offset credit calculation server 60 (S903). Also, an actual power generation amount will be reported from the terminal device 40 at a power plant A to the carbon offset credit calculation server 60 (S904). And then, an actual fuel consumption amount by a boiler will be reported from the terminal device 50 at a boiler site to the carbon offset credit calculation server 60 (S905).

Then, the carbon offset credit calculation server 60 calculates a carbon offset amount and a carbon offset credit according to the identification of each collection site based on the equation shown in Fig. 7 and Fig. 8 (S906). The carbon offset credit calculation server 60 displays the result using GUI (S907). In addition, these results, which are associated with the identification, will be memorized in the memory 67 (S908).

Then, the carbon offset credit calculation server 60 will feedback the result of work quality to the terminal device 10,20, which are located at each biomass collection site (S909, S910). Furthermore, the carbon offset credit calculation server 60 will feedback productivity to the fuel production site (S911). Herein, the carbon offset credit calculation server 60 will sell the carbon offset credit such as to the carbon offset credit trading site 70 based on specific rules (S912).

As mentioned above, a carbon offset credit calculation system 1 utilizing waste oil according to this embodiment comprises a first terminal device 10,20, which inputs information relating to waste oil regarded as a biomass resource; a second terminal device 30, which is owned by a fuel manufactory and inputs information relating to biofuel, which is purified from waste oil, wherein the fuel manufactory produces the biofuel based on the waste oil; a third terminal device 40,50, which is owned by a site consuming the biofuel, inputs information relating to power generation and fuel consumption; a carbon offset credit calculation server 60, which calculates a carbon offset amount based on information input by the first terminal device 10,20, the second terminal device 30, and the third terminal device 40,50, and calculates carbon offset credit based on the carbon offset amount. The first terminal device 10,20, the second terminal device 30, the third terminal device 40,50, and the carbon offset credit calculation server 60 are connected to one another via the network. With this configuration, the carbon offset credit calculation system 1 utilizing waste oil can improve the interoperability of the data relating to waste oil, wherein said data used to be dispersed. As a result, the carbon offset credit can easily be calculated and obtained. In addition, IoT technology can be applicable to grasp various actual measurements.

Furthermore, the carbon offset credit calculation server 60 conducts (1) Central management to give a unique identification to each shop, factory, company group, (2) Credit distribution operation based on carbon offset contribution rate relating to an identification (3) Productivity management of each fuel factory manufactory by adding an identification, (4) Work quality management of a biomass collection site by adding an identification to each terminal device at a biomass collection site. As a result of this, the carbon offset amount, which is produced by a unique technology utilizing waste oil, can be counted according to each region, the whole of Japan and each nation, and can be utilized effectively as carbon offset credit. It is to be noted that the present invention is not limited to the above-described embodiments and modified examples, and various modifications are possible within the scope of the present invention.

In addition, the application for biofuel produced from waste oil as a biomass resource is (a) diesel power generation, (b) fuel for a boiler and an incinerator, (c) methane power generation based on residue sludge wasted during the biofuel purification process. The values of the residue sludge wasted during the biofuel purification process shown (c) are able to be monitored by a fuel manufactory. Therefore, supply amount as a methane power generation resource, methane power generation amount, carbon offset amount by power generation, is operable to be calculated by this system. In addition, the increase of carbon offset and reduction credit can be expected by obtaining small and various power generation data from each power generation site, such as small wind power generator, small solar power generator, small waterpower generator and so on. This is the same as the terminal device 40,50 in this carbon offset credit calculation system, In this case, the above-mentioned method "total power generation amount at each power generator × CO2 emission coefficient of each power generation company" can be applied.

Note that in order to achieve the above objects as the carbon offset credit calculation system, it is also possible to embody the present invention determining method that includes, as its steps, the characteristic units included in such the carbon offset credit calculation system, and as a program causing a computer to execute such steps. It should also be noted that such program can be distributed on a recording medium such as a USB and over a transmission medium such as the Internet.

### Numerical References

- 1: carbon offset credit calculation system
- 10,20: terminal device (first terminal device)
- 11: input unit
- 12: screen
- 13: transaction unit
- 14: program execution unit
- 30: terminal device (second terminal device)
- 40,50: terminal device (third terminal device)
- 60: carbon offset credit calculation server
- 61: input unit
- 62: display unit
- 63: application execution unit
- 64: request generation unit
- 65: communication unit
- 66: calculation unit
- 67: memory

## Claims

1. A carbon offset credit calculation system (1) utilizing waste oil comprising:
a first terminal device (10, 20), which inputs information relating to waste oil regarded as a biomass resource;
a second terminal device (30), which is owned by a fuel manufactory and inputs information relating to biofuel, which is purified from waste oil, wherein the fuel manufactory produces the biofuel based on the waste oil;
a third terminal device (40, 50), which is owned by a site consuming biofuel, inputs information relating to power generation and fuel consumption;
a carbon offset credit calculation server (60), which calculates a carbon offset amount based on information input by the first terminal device (10, 20), the second terminal device (30), and the third terminal device (40, 50), and calculates a carbon offset credit based on the carbon offset amount;
wherein the first terminal device (10, 20), the second terminal device (30), the third terminal device (40, 50), and
the carbon offset credit calculation server (60), are connected to one another via a network,
wherein the first terminal device (10, 20), the second terminal device (30) and the third terminal device (40, 50) comprise an input unit (11) and a transaction unit (13), adapted to transact data between the terminal device (10, 20, 30, 40, 50) and the carbon offset credit calculation server (60) via the network,
wherein the information being input by the input unit (11) of the first terminal device (10, 20) is a collected waste oil amount from the first terminal device (10, 20) located at a collection site,
wherein the information being input by the input unit (11) of the second terminal device (30) is a biofuel production amount,
wherein the information being input by the input unit (11) of the third terminal device (40, 50) is an actual biofuel power generation amount and an actual biofuel consumption amount by a boiler or an incinerator,
wherein the carbon offset credit calculation server (60) comprising:
a communication unit (65) adapted to communicate data with the first terminal device (10, 20), the second terminal device (30) and the third terminal device (40, 50) via the network a ;
a calculation unit (66) adapted to calculate J z the carbon offset amount based on the obtained values via the communication unit (65) and also adapted to calculate the carbon offset credit based on said carbon offset amount; and
a memory (67),
wherein the calculation unit (66) is adapted to calculate the carbon offset amount by multiplying the actual biofuel power generation amount, which is obtained via the communication unit, with a CO2 emission coefficient.

2. The carbon offset credit calculation system (1) utilizing waste oil according to claim 1,
wherein the calculation unit (66) is adapted to calculate a biofuel estimated production amount by multiplying the collected waste oil amount at each collection site, which is obtained via the communication unit (65), with a fuel yield at each collection site, and then the calculation unit (66) is adapted to calculate a a biofuel production contribution rate based on a ratio of said biofuel estimated production amount and then obtains the carbon offset amount at each collection site by multiplying the biofuel production contribution rate with the carbon offset amount.

3. The carbon offset credit calculation system (1) utilizing waste oil according to claim 2,
wherein the carbon offset amount at each collection site is memorized in the memory (67) according to the identification of the first terminal device (10, 20), the second terminal device (30) and the third terminal device (40, 50) which are located at said each collection site.

4. The carbon offset credit calculation system (1) utilizing waste oil according to claim 3,
wherein the memory (67) is adapted to memorize at least one of: an identification (601), which is given to the first terminal device (10, 20), the second terminal device (30) and the third terminal device (40, 50); information (602) related to the location of the terminal device (10, 20, 30, 40, 50); a carbon offset credit (605) based on the carbon offset amount related to the identification (601); a nation/region information (603) related to the identification (601); productivity (607) related to the identification (601); and a work quality information (606) related to the identification (601) .

5. A carbon offset credit calculation method utilizing waste oil wherein a first terminal device (10, 20), a second terminal device (30), a third terminal device (40, 50), and a carbon offset credit calculation server (60), are connected to one another via a network comprising:
a collected biomass amount reporting step, which reports a collected waste oil amount from the first terminal device (10, 20) located at each collection site to a carbon offset credit calculation server (60) via the network,
; wherein the collection site collects waste oil and the carbon offset credit calculation server (60) calculates a carbon offset credit;
a fuel production reporting step, which reports a biofuel production amount from the second terminal device (30) located at a fuel manufactory to the carbon offset credit calculation server (60) via the network ;
an actual power generation amount reporting step, which reports an actual power generation amount of a biomass generator using the biofuel from the third terminal device (40, 50) located at a power plant to the carbon offset credit calculation server (60) via the network and
a calculation step, wherein the carbon offset credit calculation server (60) calculates a carbon offset amount based on said reported information via the network - and calculates a carbon - offset credit based on said carbon offset amount in the calculation step,
wherein the carbon offset amount is calculated by multiplying the actual biofuel power generation amount with a CO2 emission coefficient in the calculation step.

6. The carbon offset credit calculation method utilizing waste oil according to claim 5, further comprising:
an actual fuel consumption amount reporting step, which reports an actual fuel consumption amount based on biofuel from a third terminal device (40, 50) located at a boiler site or an incinerator site to the carbon offset credit calculation server (60) via the network.

7. The carbon offset credit calculation method utilizing waste oil according to claim 5 or 6, further comprising:
a step, which feedbacks the result of work quality to the first terminal device (10, 20) via the network ; and
a step, which feedbacks the result of productivity to the second terminal device (30) via the network.

8. A program having instructions that when executed by a computer causes the computer to perform the carbon offset credit calculation method of claims 5-7.

## Patentansprüche

1. - Kohlenstoffausgleichsguthaben-Berechnungssystem (1) unter Verwendung von Altöl, umfassend:
ein erstes Endgerät (10, 20), das Informationen in Bezug auf Altöl eingibt, das als Biomasseressource betrachtet wird;
ein zweites Endgerät (30), das im Besitz eines Kraftstoffwerks ist und Informationen in Bezug auf Biokraftstoff eingibt, der aus Altöl aufgereinigt wird, wobei das Kraftstoffwerk den Biokraftstoff basierend auf dem Altöl herstellt;
ein drittes Endgerät (40, 50), das sich im Besitz eines Standorts befindet, der Biokraftstoff verbraucht, gibt Informationen in Bezug auf Stromerzeugung und Kraftstoffverbrauch ein;
einen Kohlenstoffausgleichsguthaben-Berechnungsserver (60), der einen Kohlenstoffausgleichsbetrag basierend auf Informationen berechnet, die von dem ersten Endgerät (10, 20), dem zweiten Endgerät (30) und dem dritten Endgerät (40, 50) eingegeben werden, und der ein Kohlenstoffausgleichsguthaben basierend auf dem Kohlenstoffausgleichsbetrag berechnet;
wobei das erste Endgerät (10, 20), das zweite Endgerät (30), das dritte Endgerät (40, 50) und der Kohlenstoffausgleichsguthaben-Berechnungsserver (60) über ein Netzwerk miteinander verbunden sind,
wobei das erste Endgerät (10, 20), das zweite Endgerät (30) und das dritte Endgerät (40, 50) eine Eingabeeinheit (11) und eine Transaktionseinheit (13) umfassen, die angepasst sind, um Daten zwischen dem Endgerät (10, 20, 30, 40, 50) und dem Kohlenstoffausgleichsguthaben-Berechnungsserver (60) über das Netz zu übertragen,
wobei die Informationen, die von der Eingabeeinheit (11) des ersten Endgeräts (10, 20) eingegeben werden, eine gesammelte Altölmenge von dem ersten Endgerät (10, 20) ist, das sich an einer Sammelstelle befindet,
wobei die von der Eingabeeinheit (11) des zweiten Endgeräts (30) eingegebenen Informationen eine Biokraftstoffproduktionsmenge sind,
wobei die von der Eingabeeinheit (11) des dritten Endgeräts (40, 50) eingegebenen Informationen eine tatsächliche Biokraftstoffstromerzeugungsmenge und eine tatsächliche Biokraftstoffverbrauchsmenge durch einen Kessel oder eine Verbrennungsanlage sind,
wobei der Kohlenstoffausgleichsguthaben-Berechnungsserver (60) Folgendes umfasst:
eine Kommunikationseinheit (65), die angepasst ist, um Daten mit dem ersten Endgerät (10, 20), dem zweiten Endgerät (30) und dem dritten Endgerät (40, 50) über das Netz zu übertragen;
eine Berechnungseinheit (66), die angepasst ist, um den Kohlenstoffausgleichsbetrag basierend auf den über die Kommunikationseinheit (65) erlangten Werte zu berechnen und auch das Kohlenstoffausgleichsguthaben basierend auf dem Kohlenstoffausgleichsbetrag zu berechnen; und
einen Speicher (67);
wobei die Berechnungseinheit (66) angepasst ist, um den Kohlenstoffausgleichsbetrag zu berechnen, indem die tatsächliche Biokraftstoffstromerzeugungsmenge, die über die Kommunikationseinheit erlangt wird, mit einem CO2-Emissionskoeffizienten multipliziert wird.

2. - Kohlenstoffausgleichsguthaben-Berechnungssystem (1) unter Verwendung von Altöl nach Anspruch 1,
wobei die Berechnungseinheit (66) angepasst ist, um eine geschätzte Biokraftstoffproduktionsmenge zu berechnen, indem sie die gesammelte Altölmenge an jeder Sammelstelle, die über die Kommunikationseinheit (65) erlangt wird, mit einem Kraftstoffertrag an jeder Sammelstelle multipliziert, und dann die Berechnungseinheit (66) angepasst ist, um eine Biokraftstoffproduktionsbeitragsrate basierend auf einem Verhältnis der geschätzten Biokraftstoffproduktionsmenge zu berechnen und dann den Kohlenstoffausgleichsbetrag an jeder Sammelstelle zu erlangen, indem sie die Biokraftstoffproduktionsbeitragsrate mit dem Kohlenstoffausgleichsbetrag multipliziert.

3. - Kohlenstoffausgleichsguthaben-Berechnungssystem (1) unter Verwendung von Altöl nach Anspruch 2,
wobei der Kohlenstoffausgleichsbetrag an jeder Sammelstelle in dem Speicher (67) entsprechend der Identifikation des ersten Endgeräts (10, 20), des zweiten Endgeräts (30) und des dritten Endgeräts (40, 50), die sich an jeder Sammelstelle befinden, gespeichert wird.

4. - Kohlenstoffausgleichsguthaben-Berechnungssystem (1) unter Verwendung von Altöl nach Anspruch 3,
wobei der Speicher (67) angepasst ist, um mindestens eines von Folgenden zu speichern: einer Identifikation (601), die dem ersten Endgerät (10, 20), dem zweiten Endgerät (30) und dem dritten Endgerät (40, 50) gegeben wird; Informationen (602), die sich auf den Standort des Endgeräts (10, 20, 30, 40, 50) beziehen; ein Kohlenstoffausgleichsguthaben (605), das auf dem Kohlenstoffausgleichsbetrag basiert, der mit der Kennung (601) verbunden ist; Nation/Region-Informationen (603), die mit der Kennung (601) verbunden sind; Produktivität (607), die mit der Kennung (601) verbunden ist; und Arbeitsqualitätsinformationen (606), die mit der Kennung (601) verbunden sind.

5. - Kohlenstoffausgleichsguthaben-Berechnungsverfahren unter Verwendung von Altöl, wobei ein erstes Endgerät (10, 20), ein zweites Endgerät (30), ein drittes Endgerät (40, 50) und ein Kohlenstoffausgleichsguthaben-Berechnungsserver (60) über ein Netzwerk miteinander verbunden sind, umfassend:
einen Mitteilungsschritt gesammelter Biomassemenge, der eine gesammelte Altölmenge von dem ersten Endgerät (10, 20), das sich an jeder Sammelstelle befindet, über das Netzwerk an einen Kohlenstoffausgleichsguthaben-Berechnungsserver (60) mitteilt, wobei die Sammelstelle Altöl sammelt und der Kohlenstoffausgleichsguthaben-Berechnungsserver (60) ein Kohlenstoffausgleichsguthaben berechnet;
einen Mitteilungsschritt über Kraftstoffproduktion, in dem ein Biokraftstoffproduktionsbetrag von dem zweiten Endgerät (30), das sich in einem Kraftstoffwerk befindet, über das Netzwerk an den Kohlenstoffausgleichsguthaben-Berechnungsserver (60) mitgeteilt wird;
einen Mitteilungsschritt eines tatsächlichen Stromerzeugungsbetrags, der einen tatsächlichen Stromerzeugungsbetrag eines Biomassegenerators, der den Biokraftstoff verwendet, von der dritten Endvorrichtung (40, 50), die sich in einem Kraftwerk befindet, über das Netzwerk an den Kohlenstoffausgleichsguthaben-Berechnungsserver (60) mitteilt; und
einen Berechnungsschritt, wobei der Kohlenstoffausgleichsguthaben-Berechnungsserver (60) einen Kohlenstoffausgleichsbetrag basierend auf den über das Netzwerk gemeldeten Informationen berechnet und ein Kohlenstoffausgleichsguthaben basierend auf dem Kohlenstoffausgleichsbetrag in dem Berechnungsschritt berechnet,
wobei der Kohlenstoffausgleichsbetrag durch Multiplikation der tatsächlichen Biokraftstoffstromerzeugungsmenge mit einem CO2-Emissionskoeffizienten in dem Berechnungsschritt berechnet wird.

6. - Kohlenstoffausgleichsguthaben-Berechnungsverfahren unter Verwendung von Altöl nach Anspruch 5, ferner umfassend:
einen Mitteilungsschritt eines tatsächlichen Kraftstoffverbrauchsbetrag, der einen auf Biokraftstoff basierenden tatsächlichen Brennstoffverbrauchsbetrag von einem dritten Endgerät (40, 50), das sich am Standort eines Kessels oder einer Verbrennungsanlage befindet, über das Netzwerk an den Kohlenstoffausgleichsguthaben-Berechnungsserver (60) mitteilt.

7. - Kohlenstoffausgleichsguthaben-Berechnungsverfahren unter Verwendung von Altöl nach Anspruch 5 oder 6, ferner umfassend:
einen Schritt, der das Resultat der Arbeitsqualität über das Netzwerk an das erste Endgerät (10, 20) zurückmeldet; und
einen Schritt, der das Resultat der Produktivität über das Netz an das zweite Endgerät (30) zurückmeldet.

8. - Programm, das Anweisungen aufweist, die, wenn sie von einem Computer ausgeführt werden, den Computer veranlassen, das Kohlenstoffausgleichberechnungsverfahren nach den Ansprüchen 5-7 durchzuführen.

## Revendications

1. - Système de calcul de crédit de compensation carbone (1) utilisant de l'huile usée, comprenant :
un premier dispositif terminal (10, 20), qui entre des informations relatives à de l'huile usée considérée comme ressource de biomasse ;
un deuxième dispositif terminal (30), qui appartient à un fabricant de carburant et qui entre des informations relatives à du biocarburant, qui est purifié à partir d'huile usée, le fabricant de carburant produisant le biocarburant sur la base de l'huile usée ;
un troisième dispositif terminal (40, 50), qui appartient à un site consommant du biocarburant, entre des informations relatives à une génération d'énergie et une consommation de carburant ;
un serveur de calcul de crédit de compensation carbone (60), qui calcule un montant de compensation carbone sur la base d'informations entrées par le premier dispositif terminal (10, 20), le deuxième dispositif terminal (30) et le troisième dispositif terminal (40, 50), et qui calcule un crédit de compensation carbone sur la base du montant de compensation carbone ;
le premier dispositif terminal (10, 20), le deuxième dispositif terminal (30), le troisième dispositif terminal (40, 50) et le serveur de calcul de crédit de compensation carbone (60) étant connectés les uns aux autres par l'intermédiaire d'un réseau,
le premier dispositif terminal (10, 20), le deuxième dispositif terminal (30) et le troisième dispositif terminal (40, 50) comprenant une unité d'entrée (11) et une unité de transaction (13), conçues pour échanger des données entre le dispositif terminal (10, 20, 30, 40, 50) et le serveur de calcul de crédit de compensation carbone (60) par l'intermédiaire du réseau,
les informations entrées par l'unité d'entrée (11) du premier dispositif terminal (10, 20) étant une quantité d'huile usée collectée à partir du premier dispositif terminal (10, 20) situé à un site de collecte,
les informations entrées par l'unité d'entrée (11) du deuxième dispositif terminal (30) étant une quantité de production de biocarburant,
les informations entrées par l'unité d'entrée (11) du troisième dispositif terminal (40, 50) étant une quantité de génération d'énergie de biocarburant réelle et une quantité de consommation de biocarburant réelle par une chaudière ou un incinérateur,
le serveur de calcul de crédit de compensation carbone (60) comprenant :
une unité de communication (65), conçue pour communiquer des données avec le premier dispositif terminal (10, 20), le deuxième dispositif terminal (30) et le troisième dispositif terminal (40, 50) par l'intermédiaire du réseau ;
une unité de calcul (66), conçue pour calculer le montant de compensation carbone sur la base des valeurs obtenues via l'unité de communication (65) et calculer également le crédit de compensation carbone sur la base dudit montant de compensation carbone ; et
une mémoire (67),
l'unité de calcul (66) étant conçue pour calculer le montant de compensation carbone en multipliant la quantité de génération d'énergie de biocarburant réelle, qui est obtenue via l'unité de communication, par un coefficient d'émission de CO2.

2. - Système de calcul de crédit de compensation carbone (1) utilisant de l'huile usée selon la revendication 1,
dans lequel l'unité de calcul (66) est conçue pour calculer une quantité de production estimée de biocarburant en multipliant la quantité d'huile usée collectée à chaque site de collecte, qui est obtenue via l'unité de communication (65), par un rendement en carburant à chaque site de collecte, puis l'unité de calcul (66) est conçue pour calculer un taux de contribution de production de biocarburant sur la base d'un ratio de ladite quantité de production estimée de biocarburant et obtient ensuite le montant de compensation carbone à chaque site de collecte en multipliant le taux de contribution de production de biocarburant par le montant de compensation carbone.

3. - Système de calcul de crédit de compensation carbone (1) utilisant de l'huile usée selon la revendication 2,
dans lequel le montant de compensation carbone à chaque site de collecte est enregistrée dans la mémoire (67) en fonction de l'identification du premier dispositif terminal (10, 20), du deuxième dispositif terminal (30) et du troisième dispositif terminal (40, 50) qui sont situés à chaque site de collecte.

4. - Système de calcul de crédit de compensation carbone (1) utilisant de l'huile usée selon la revendication 3,
dans lequel la mémoire (67) est conçue pour enregistrer au moins un des éléments suivants : une identification (601), qui est donnée au premier dispositif terminal (10, 20), au deuxième dispositif terminal (30) et au troisième dispositif terminal (40, 50) ; des informations (602) relatives à l'emplacement du dispositif terminal (10, 20, 30, 40, 50) ; un crédit de compensation carbone (605) basé sur le montant de compensation carbone relatif à l'identification (601) ; des informations de nation/région (603) relatives à l'identification (601) ; une productivité (607) relative à l'identification (601) ; et des informations de qualité de travail (606) relatives à l'identification (601).

5. - Procédé de calcul de crédit de compensation carbone utilisant de l'huile usée, dans lequel un premier dispositif terminal (10, 20), un deuxième dispositif terminal (30), un troisième dispositif terminal (40, 50) et un serveur de calcul de crédit de compensation carbone (60) sont connectés les uns aux autres par l'intermédiaire d'un réseau, comprenant :
une étape de rapport de quantité de biomasse collectée, qui rapporte une quantité d'huile usée collectée à partir du premier dispositif terminal (10, 20) situé à chaque site de collecte à un serveur de calcul de crédit de compensation carbone (60) par l'intermédiaire du réseau, le site de collecte collectant de l'huile usée et le serveur de calcul de crédit de compensation carbone (60) calculant un crédit de compensation carbone ;
une étape de rapport de production de carburant, qui rapporte une quantité de production de biocarburant du deuxième dispositif terminal (30) situé à une usine de fabrication de carburant au serveur de calcul de crédit de compensation carbone (60) par l'intermédiaire du réseau ;
une étape de rapport de quantité de génération d'énergie réelle, qui rapporte une quantité de génération d'énergie réelle d'un générateur de biomasse utilisant le biocarburant à partir du troisième dispositif terminal (40, 50) situé à une centrale électrique au serveur de calcul de crédit de compensation carbone (60) par l'intermédiaire du réseau ; et
une étape de calcul, dans laquelle le serveur de calcul de crédit de compensation carbone (60) calcule un montant de compensation carbone sur la base desdites informations rapportées par l'intermédiaire du réseau et calcule un crédit de compensation carbone sur la base dudit montant de compensation carbone lors de l'étape de calcul,
le montant de compensation carbone étant calculé en multipliant la quantité de génération d'énergie de biocarburant réelle par un coefficient d'émission de CO2 dans de l'étape de calcul.

6. - Procédé de calcul de crédit de compensation carbone utilisant de l'huile usée selon la revendication 5, comprenant en outre :
une étape de rapport de quantité de consommation de carburant réelle, qui rapporte une quantité de consommation de carburant réelle sur la base d'un biocarburant à partir d'un troisième dispositif terminal (40, 50) situé à un site de chaudière ou un site d'incinérateur au serveur de calcul de crédit de compensation carbone (60) par l'intermédiaire du réseau.

7. - Procédé de calcul de crédit de compensation carbone utilisant de l'huile usée selon la revendication 5 ou 6, comprenant en outre :
une étape qui renvoie le résultat d'une qualité de travail au premier dispositif terminal (10, 20) par l'intermédiaire du réseau ; et
une étape qui renvoie le résultat de productivité au deuxième dispositif terminal (30) par l'intermédiaire du réseau.

8. - Programme ayant des instructions qui, lorsqu'elles sont exécutées par un ordinateur, amènent l'ordinateur à effectuer le procédé de calcul de compensation carbone selon les revendications 5 à 7.
